# EUROPEAN PATENT APPLICATION

(11) **EP 3 072 612 A2**
(43) Date of publication of application: **28.09.2016**
(21) Application number: 16161974.7
(22) Date of filing: 23.03.2016
(51) Int. Cl.: B22F 3/105, B22F 3/15, B22F 5/00

(54) **COMPONENT AND METHOD FOR FABRICATING A COMPONENT**

(30) Priority: 27.03.2015 US 201514671593
(71) Applicant: General Electric Company, Schenectady, NY 12345 (US)
(72) Inventor: SCHICK, David Edward, Greenville, SC South Carolina 29615 (US); LACY, Benjamin Paul, Greenville, SC South Carolina 29615 (US); MEANS, Gregory Scott, Greenville, SC South Carolina 29615 (US); LUM, Kassy Moy, Greenville, SC South Carolina 29615 (US); BARNELL, Steven John, Greenville, SC South Carolina 29615 (US)
(74) Representative: Pöpper, Evamaria

(57) **Abstract**

Provided is a method for fabricating a component (200) having a high temperature resistant surface. The method includes the steps of providing a metallic powder (203) to a base material (201), heating the metallic powder (203) to a temperature sufficient to join at least a portion of the metallic powder (203) to form an initial layer (205), sequentially forming additional layers (207) over the initial layer (205) by heating a distributed layer (206) of the metallic powder (203) to a temperature sufficient to join at least a portion of the distributed layer (206) of the metallic powder (203) and join the formed additional layers (207) to underlying layers, repeating the steps of sequentially forming the additional layers (207) over a previously formed layer (208) to form a formed portion (210) of the component (200), and optionally removing the formed portion (210) of the component (200) and a portion of the base material (201). Also provided is a component (200) having a high temperature resistant surface.

## Description

### FIELD OF THE INVENTION

The present invention is directed toward a component and a method for fabricating a component. More specifically, the present invention is directed to a three-dimensional manufactured component having a high temperature resistant surface.

### BACKGROUND OF THE INVENTION

Turbine systems are continuously being modified to increase efficiency and decrease cost. For example, modifying the turbine system to operate at increased temperatures can increase the efficiency of the turbine system. One method for increasing the operating temperature of the turbine system includes forming cooling features in the system components. These cooling features are often formed using specific manufacturing methods, such as three-dimensional (3D) printing, which permits the formation of intricate or complex cooling features. However, 3D printing is currently limited to materials which are considered to be easily weldable.

Another method for increasing the operating temperature of the turbine system includes forming the components from materials that can withstand such temperatures during continued use. These materials, which are commonly referred to as "high temperature" materials, still require cooling at the desired operating temperature. However, the high temperature materials are typically not considered to be weldable using 3D printing techniques. Therefore, the ability to take advantage of 3D printing capabilities to cool high temperature materials is currently limited.

When mixing or changing powders, most of the unused powder is scrapped after the build. Frequently, more than 75% of the powder in a single build is unused, resulting in at least 75% of the powder material being scrapped, which is expensive and results in wasted powder. Additionally, mixing or changing powders can lead to inconsistent builds during manufacturing.

A component and method with improvements in the process and/or the properties of the components formed would be desirable in the art.

### BRIEF DESCRIPTION OF THE INVENTION

In one exemplary embodiment, a method for fabricating a component includes the steps of providing a metallic powder to a base material, heating the metallic powder to a temperature sufficient to join at least a portion of the metallic powder to form an initial layer, sequentially forming additional layers over the initial layer by heating a distributed layer of the metallic powder to a temperature sufficient to join at least a portion of the distributed layer of the metallic powder and join the formed additional layers to underlying layers, repeating the steps of sequentially forming the additional layers over a previously formed layer to form a formed portion of the component, and optionally removing the formed portion of the component and a portion of the base material. The component is formed of the formed portion and the base material or the formed portion and the portion of the base material.

In another exemplary embodiment, a method for fabricating a component including the steps of providing a metallic powder to a base material, the metallic powder being of a dissimilar material to the base material, heating the metallic powder to a temperature sufficient to weld at least a portion of the metallic powder to form an initial layer, sequentially forming additional layers over the initial layer by heating a distributed layer of the metallic powder to a temperature sufficient to weld at least a portion of the distributed layer of the metallic powder and weld the formed additional layers to underlying layers, repeating the steps of sequentially forming the additional layers over a previously formed layer to form a formed portion of the component, and optionally removing the formed portion of the component and a portion of the base material. The component is formed of the formed portion and the base material or the formed portion and the portion of the base material. The high temperature base material is formed of a material selected from the group consisting of nickel-based superalloy, cobalt-based superalloy, iron-based superalloy, and combinations thereof.

In another exemplary embodiment, a component includes a formed portion of the component and a portion of a base material having a high temperature resistant surface. The formed portion includes sequentially joined layers of metallic powder and the base material includes a material selected from the group consisting of nickel-based superalloy, cobalt-based superalloy, iron-based superalloy, and combinations thereof.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a flow chart of a method for fabricating a component.
FIG. 2 is a process view of a method for fabricating a component.
FIG. 3 is a section view of a component, according to an embodiment of the disclosure.

Wherever possible, the same reference numbers will be used throughout the drawings to represent the same parts.

### DETAILED DESCRIPTION OF THE INVENTION

Provided are a component having a high temperature resistant surface and a method for fabricating a component having a high temperature resistant surface. Embodiments of the present disclosure, in comparison to components and methods not using one or more of the features disclosed herein, provide additive manufacturing components including high temperature materials, increase temperature resistance, decrease fabrication costs, decrease material waste, increase fabrication efficiency, provide attachment of 3D manufactured portions to high temperature resistant materials, or a combination thereof.

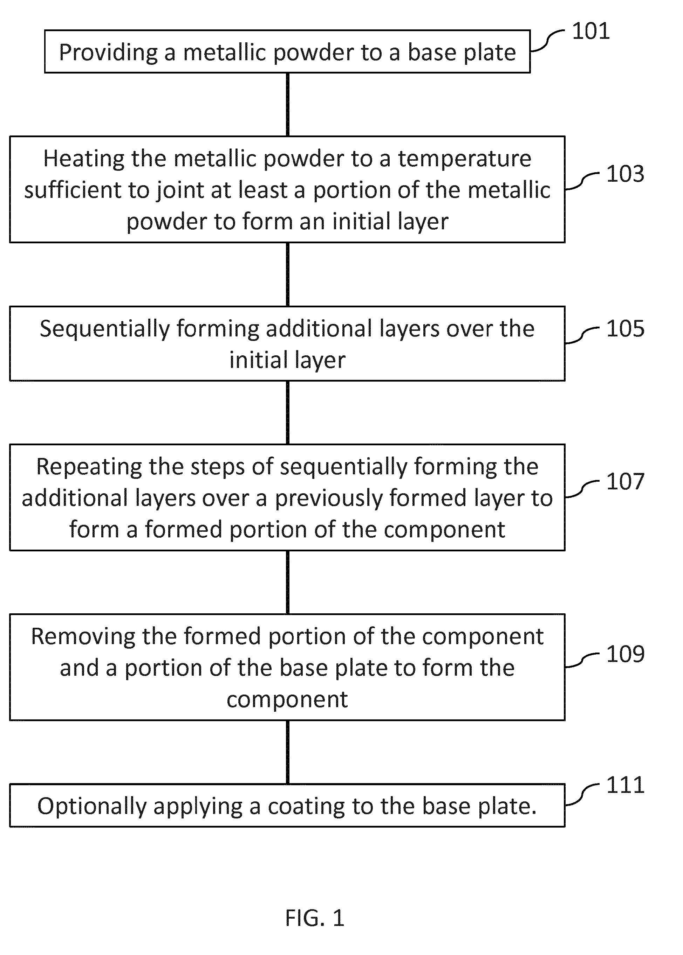

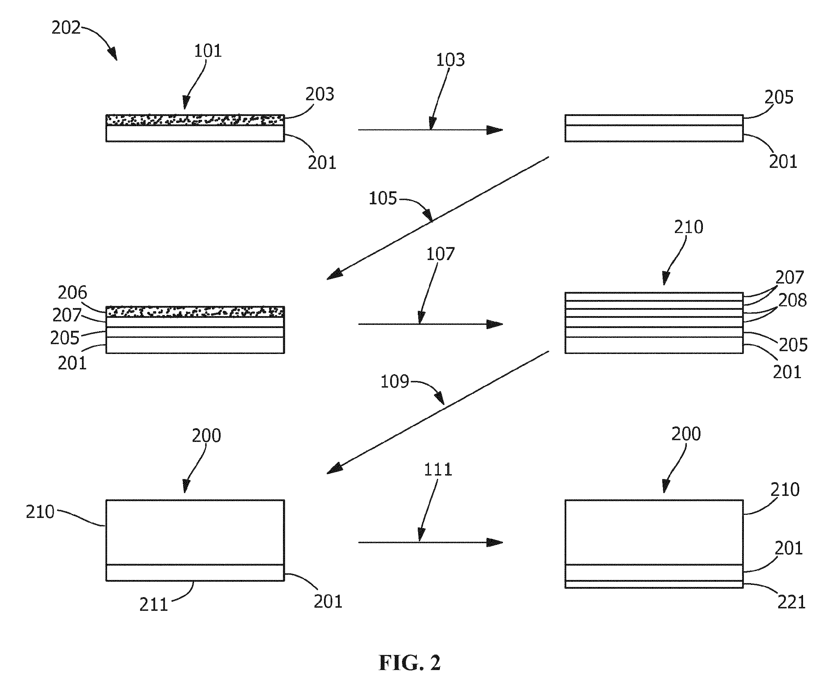

Referring to FIGS. 1-2, in one embodiment, a method 100 for fabricating a component 200 includes an additive method. Additive methods include any manufacturing method for making and/or forming net or near-net shape structures. As used herein, the phrase "near-net" refers to a structure, such as the component 200, being formed with a geometry and size very similar to the final geometry and size of the structure, requiring little or no machining and processing after the additive method. As used herein, the phrase "net" refers to the structure being formed with a geometry and size requiring no machining and processing. The structure formed by the additive manufacturing method includes any suitable geometry, such as, but not limited to, square, rectangular, triangular, circular, semi-circular, oval, trapezoidal, octagonal, pyramidal, geometrical shapes having features formed therein, any other geometrical shape, or a combination thereof. For example, the additive method may include forming cooling features, such as a pin bank, in the component 200.

Suitable additive manufacturing methods include, but are not limited to, the processes known to those of ordinary skill in the art as Direct Metal Laser Melting (DMLM), Direct Metal Laser Sintering (DMLS), Laser Engineered Net Shaping (LENS), Selective Laser Melting (SLM), Electron Beam Melting (EBM), or a combination thereof.

As illustrated in FIGS. 1-2, in one embodiment, the method 100 for fabricating a component 200 includes providing a metallic powder 203 to a base material 201 (step 101), heating the metallic powder 203 (step 103) to a temperature sufficient to join at least a portion of the metallic powder 203 to form an initial layer 205, sequentially forming additional layers 207 (step 105) over the initial layer 205 to form a formed portion 210 of the component 200, and optionally removing (step 109) the formed portion 210 and a portion of the base material 201 to form the component 200. The sequentially forming additional layers 207 (step 105) over the initial layer 205 includes heating a distributed layer 206 of the metallic powder 203 to a temperature sufficient to join at least a portion of the distributed layer 206 and join the formed additional layers 207 to underlying layers. In another embodiment, the method 100 includes repeating (step 107) the steps of sequentially forming the additional layers 207 over a previously formed layer 208 to form the formed portion 210 of the component 200. The previously formed layer includes any layer formed over the base material 201, including the initial layer 205 and/or any other additional layer(s) 207 directly or indirectly joined to the initial layer 205.

The heating the metallic powder 203 (step 103) includes any suitable method for heating the metallic powder 203 to a temperature sufficient to join at least a portion of the metallic powder 203 together. For example, in one embodiment, the heating the metallic powder 203 (step 103) to a temperature sufficient to join the metallic powder includes melting the metallic powder 203. In another embodiment, the heating the metallic powder 203 (step 103) to a temperature sufficient to join the metallic powder includes sintering at least a portion of the metallic powder 203, welding at least a portion of the metallic powder 203, or a combination thereof. In a further embodiment, the heating the metallic powder 203 (step 103) includes controllably directing a focused energy source 202 toward the metallic powder 203.

Suitable focused energy sources include, but are not limited to, a laser device, an electron beam device, or a combination thereof. The laser device includes any laser device operating in a power range and travel speed for melting and/or welding the metallic powder 203, such as, but not limited to, a fiber laser, a CO₂ laser, or a ND-YAG laser. In one embodiment, the power range includes, but is not limited to, between 125 and 500 watts, between 150 and 500 watts, between 150 and 400 watts, or any combination, sub-combination, range, or sub-range thereof. In another embodiment, the travel speed includes, but is not limited to, between 400 and 1200 mm/sec, between 500 and 1200 mm/sec, between 500 and 1000 mm/sec, or any combination, sub-combination, range, or sub-range thereof. For example, in a further embodiment, the focused energy source 210 operates in the power range of between 125 and 500 watts, at the travel speed of between 400 and 1200 mm/sec for one to three contour passes. In another embodiment, the focused energy source 210 includes a hatch spacing of between about 0.08 mm and 0.2 mm.

The parameters of the focused energy source will depend upon the material of the metallic powder 203 used to form the formed portion 210 and/or a desired thickness of each layer of the build. Suitable materials for the metallic powder 203 include any material capable of being joined through additive manufacturing, such as, but not limited to, a metal, a metallic alloy, a superalloy, steel, a stainless steel, a tool steel, nickel, cobalt, chrome, titanium, aluminum, or a combination thereof. For example, in one embodiment, the material for the metallic powder 203 includes a cobalt(Co)-chromium(Cr)-molybdenum(Mo) alloy, such as, but not limited to, 70Co-27Cr-3Mo. In another embodiment, the metallic powder 203 has a composition of, by weight, between about 50% and about 55% nickel and cobalt combined, between about 17% and about 21% chromium, between about 4.75% and about 5.50% niobium and tantalum combined, between about 2.80% and about 3.30% molybdenum, between about 0.65% and about 1.15% titanium, between about 0.2% and about 0.80% aluminum, up to about 0.08% carbon, up to about 0.35% manganese, up to about 0.35% silicon, up to about 0.015% phosphorus, up to about 0.015% sulfur, up to about 1.0% cobalt, up to about 0.3% copper, and balance of iron and incidental impurities. In another embodiment, the metallic powder 203 has a composition of, by weight, between about 18.0% and about 22% chromium, between about 9.0% and about 11.0% cobalt, between about 8.0% and about 9.0% molybdenum, between about 1.9% and about 2.3% titanium, between about 1.3% and about 1.7% aluminum, up to about 1.5% iron, up to about 0.3% manganese, up to about 0.15% silicon, between about 0.04% and about 0.08% carbon, up to about 0.008% boron, and balance nickel and incidental impurities.

In one embodiment, after joining the initial layer 205 and/or any additional layers 207 to form the formed portion 210, the base material 201 forms a high temperature surface 211 for the component 200. In another embodiment, after joining the initial layer 205 and/or any additional layers 207 to form the formed portion 210, the optionally removing (step 109) the formed portion 210 and a portion of the base material 201 includes cutting or grinding the base material 201 to form the high temperature surface 211 for the component 200. One suitable method of cutting the base material 201 includes wire electric discharge machining. In one embodiment, the wire electric discharge machining cuts through the base material 201, removing between about 1 mm (0.04 inches) and about 6 mm (0.24 inches), between about 1.5 mm (0.06 inches) and about 5 mm (0.20 inches), between about 2 mm (0.08 inches) and about 4 mm (0.16 inches), or any combination, sub-combination, range, or sub-range thereof, of the base material 201. The wire electric discharge machining, or other method of removing (step 109), leaves a portion of the base material 201, including the high temperature surface 211, secured to the formed portion 210 to form the component 200. Any excess portion of the base portion 201 may then be machined off, forming the component 200.

For example, after the removing (step 109) and/or machining, the portion of the base material 201 secured to the formed portion 210 includes a thickness of up to about 10 mm (0.39 inches), between about 0.5 mm (0.02 inches) and about 10 mm (0.39 inches), up to about 8 mm (0.32 inches), between about 1 mm (0.04 inches) and about 8 mm (0.32 inches), up to about 6 mm (0.24 inches), between about 0.5 mm (0.02 inches) and about 6 mm (0.24 inches), between about 1 mm (0.04 inches) and about 6 mm (0.24 inches), between about 2 mm (0.08 inches) and about 6 mm (0.24 inches), up to about 4 mm (0.16 inches), up to about 2 mm (0.08 inches), or any combination, sub-combination, range, or sub-range thereof.

The initial layer 205 and each of the additional layers 207 include a thickness in the range of 20-100 µm (0.0008-0.004 inches), 20-80 µm (0.0008-0.0032 inches), 40-60 µm (0.0016-0.0024 inches), or any other combination, sub-combination, range, or sub-range thereof. The thickness of the initial layer 205 is equal to or dissimilar from the thickness of each of the additional layers 207, which is maintained or varied for each of the additional layers 207. The thickness of the portion of the base material 201 secured to the formed portion 210 includes, but is not limited to, up to about 60 mm, up to about 50 mm, up to about 40 mm, between about 20 mm and about 60 mm, up to about 30 mm, up to about 20 mm, up to about 10 mm, up to about 8 mm, up to about 6 mm, between about 2 mm and about 10 mm, between about 2 mm and about 6 mm, or any combination, sub-combination, range, or sub-range thereof. Based upon the thicknesses of the initial layer 205, each of the additional layers 207, and the base material 201, a thickness of the component 200 includes any suitable thickness in the range of 250-350000 µm (0.010-13.78 inches), 250-200000 (0.010-7.87 inches), 250-50000 µm (0.010-1.97 inches), 250-6350 µm (0.010-0.250 inches), or any combination, sub-combination, range, or sub-range thereof.

The component 200 formed according to one or more of the methods disclosed herein includes any component surfaces that are exposed to high temperatures, such as, but not limited to, temperatures of at least 1,500 °F. Suitable components include combustion components, turbine components, gas turbine components, hot gas path components, or a combination thereof. For example, one suitable component includes a micro mixer having the high temperature surface 211 that is a flame contacting surface. Another example includes a shroud having a base material and an additive portion, the base material being exposed to hot gases during operation and the additive portion forming a cooling feature, such as a pin bank, that facilitates cooling of the hot side of the component. Other suitable components include, but are not limited to, nozzles, shrouds, combustors, fuel swirlers, cartridge tips, or a combination thereof. The component 200 may also include a sub-components, such as, for example, the trailing edge configured for attachment to an airfoil.

In one embodiment, the composition of the base material 201 and the metallic powder 203 is dissimilar. For example, in another embodiment, the base material 201 is a high temperature material and/or wear resistant material, and the metallic powder 203 includes any material suitable for additive manufacturing, as disclosed above. Subsequent to joining the formed portion 210 and the base material 201, the high temperature material of the base material 201 forms a high temperature resistant portion of the component 200. The high temperature resistant portion includes any portion that maintains or substantially maintains its strength and/or shape at increased temperatures as compared to the other portions of the component 200. For example, the base material 201 may include the high temperature surface 211 of the component 200, such as, but not limited to, a flame holding side of a micromixer or the exterior of a hot gas path component such as a nozzle or shroud.

Additionally or alternatively, the base material 201 may include a non-weldable or weld-resistant material. As used herein, a non-weldable material is any material which cracks or is otherwise damaged from current welding techniques. When the base material 201 includes the non-weldable material, the joining of the initial layer 205 and/or the additional layers 207 to the base material 201, according to the method 100 disclosed herein, secures the formed portion 210 to the base material 201, which remains devoid or substantially devoid of cracking. For example, in one embodiment, the formed portion 210, which includes a pin bank, is joined to the base material 201, which is devoid or substantially devoid of cracking due to the joining.

Suitable materials for the base material 201 include any high temperature and/or non-weldable material that maintains or substantially maintains its strength and/or shape at temperatures of at least 1,500 °F. For example, suitable materials include, but are not limited to, metallic materials; alloys, such as nickel-based superalloys, cobalt-based superalloys, and/or iron-based superalloys; non-metallic materials, such as ceramic materials; or a combination thereof Additionally, the base material 201 includes any suitable shape and/or geometry for forming a portion of the component 200 and/or forming an additive manufacturing portion thereon. Suitable shapes and/or geometries include, but are not limited to, flat, substantially flat, curved, regular, irregular, or a combination thereof. For example, the base material 201 may include a flat or substantially flat base plate, a flattened or substantially flattened surface of an article, or a non-flat surface.

One suitable material for the base material 201 includes a composition of, by weight percent, between 5.25% and 5.75% Aluminum (Al), between 0.6% and 0.9% Titanium (Ti), between 2.8% and 3.3% Tantalum (Ta), between 8.0% and 8.7% Chromium (Cr), between 9.0% and 10.0% Cobalt (Co), between 0.4% and 0.6% Molybdenum (Mo), between 9.3% and 9.7% Tungsten (W), up to 0.12% Silicon (Si), between 1.3% and 1.7% Hafnium (Hf), between 0.01% and 0.02% Boron (B), up to 0.1% Carbon (C), between 0.005% and 0.02% Zirconium (Zr), up to 0.2% Iron (Fe), up to 0.1% Manganese (Mn), up to 0.1% Copper (Cu), up to 0.01% Phosphorous (P), up to 0.004% Sulfur (S), up to 0.1% Niobium (Nb), and balance of nickel (Ni) and incidental impurities.

Another suitable material for the base material 201 includes a material having a composition of, by weight percent, between about 5.0% and about 10.0% cobalt, between about 5.0% and about 10.0% chromium, between about 3.0% and about 8.0% tantalum, between about 5.0% and about 7.0% aluminum, between about 3.0% and about 10% tungsten, up to about 6.0% rhenium, up to about 2.0% molybdenum, up to about 0.50% hafnium, up to about 0.07% carbon, up to about 0.015% boron, up to about 0.075% yttrium, and a balance of nickel and incidental impurities. For example, in one embodiment, the base material 201 includes a material having a nominal composition of, by weight percent, about 7.5% cobalt, about 7.0% chromium, about 6.5% tantalum, about 6.2% aluminum, about 5.0% tungsten, about 3.0% rhenium, about 1.5% molybdenum, about 0.15% hafnium, about 0.05% carbon, about 0.004% boron, about 0.01% yttrium, and a balance of nickel and incidental impurities.

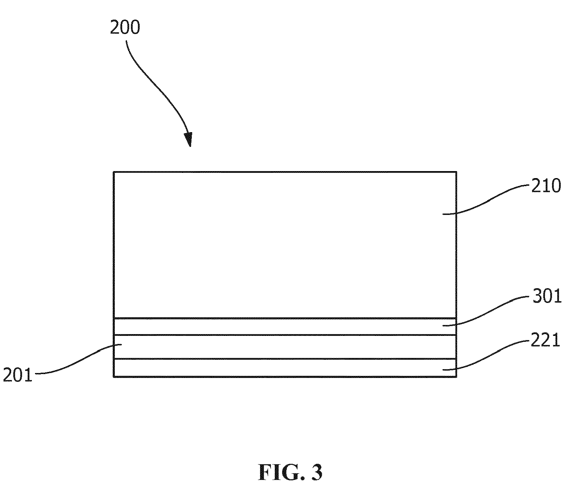

In one embodiment, as illustrated in FIG. 3, an intermediate layer 301 is disposed intermediate the formed portion 210 and the base material 201. In another embodiment, the intermediate layer 301 is applied to the base material 201 prior to providing the metallic powder 203 to the base material 201 (step 101). In a further embodiment, the intermediate layer 301 is machined flat or substantially flat, and then the metallic powder 203 is provided to the base material 201. The intermediate layer 301 is applied by any application method, such as, but not limited to spreading, depositing, tungsten inert gas (TIG) welding, or a combination thereof. The intermediate layer 301 may be the same as, similar to, or dissimilar from the metallic powder 203. Suitable intermediate layers include, but are not limited to, butter layers, metallic layers, metallic alloy layers, such as nickel-based superalloys, or a combination thereof. For example, one suitable intermediate layer 301 includes a composition of, by weight, between about 20% and about 23% chromium, between about 8% and about 10% molybdenum, between about 4.0% and about 6.0% iron, up to about 0.5% silicon, up to about 0.5% manganese, up to about 0.1% carbon, and balance nickel and incidental impurities. Another suitable intermediate layer 301 includes a composition of, by weight, between about 20% and about 24% chromium, between about 20% and about 24% nickel, between about 13% and about 15% tungsten, between about 0.05% and about 0.15% carbon, between about 0.02% and about 0.12% lanthanum, up to about 3% iron, up to about 1.25% manganese, up to about 0.015% boron, and a balance cobalt and incidental impurities.

Additionally, the method 100 may further include the steps of hot isostatically pressing (HIP'ing) the component 200 and/or solution heat treating (solutionizing) the component 200. The HIP'ing includes, after forming the formed portion 210, pressing the component 200 at an elevated temperature and elevated pressure sufficient to further consolidate the component 200. For example, in another embodiment, the component 200 is HIP'd for 3-5 hours at an elevated temperature of between 1149° C and 1260° C (2100° F and 2300° F), and an elevated pressure of between 68.95 MPa and 137.9 MPa (10,000 PSI and 20,000 PSI). The HIP'ing further consolidates the component 200 to increase the density of the component 200 from, for example, between about 97% and 99% to between about 99.5% and 99.9%. The solutionizing includes, after forming the formed portion 210 and/or HIP'ing the component 200, treating the component 200 for 1-2 hours in vacuum at an elevated temperature of between 1093° C and 1205° C (2000° F and 2200° F). The elevated temperature includes any temperature sufficient for distributing segregated alloying elements within the component 200. It will be recognized by those skilled in the art that HIP'ing temperatures and heat treat temperatures will be highly dependent on the composition of the powders and the desired properties.

The method 100 may also include, after the removing (step 109), optionally applying a coating 221 (step 111), such as a bond coat and/or a thermal barrier coating (TBC), to the base material 201. The bond coat includes any suitable bond coat, such as, but not limited to, a MCrAlY bond coat. In another embodiment, the coating 221 is applied to the high temperature surface 211 of base material 201. For example, in a further embodiment, the formed portion 210 is formed on the base material 201, a portion of the base material 201 is removed to form the component 200, and then the bond coating and/or the TBC is sprayed over the high temperature surface 211 of the base material 201, which is opposite the formed portion 210.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method (100) for fabricating a component (200), comprising the steps of:
providing a metallic powder (203) to a base material (201);
heating the metallic powder (203) to a temperature sufficient to join at least a portion of the metallic powder (203) to form an initial layer (205),
sequentially forming additional layers (207) over the initial layer (205) by heating a distributed layer (206) of the metallic powder (203) to a temperature sufficient to join at least a portion of the distributed layer (206) of the metallic powder (203) and join the formed additional layers (207) to underlying layers,
repeating the steps of sequentially forming the additional layers (207) over a previously formed layer (208) to form a formed portion (210) of the component (200); and
optionally removing the formed portion (210) of the component (200) and a portion of the base material (201);
wherein the component (200) is formed of the formed portion (210) and the base material (201) or the formed portion (210) and the portion of the base material (201).

2. The method (100) of claim 1, wherein the high temperature base material (201) is formed of a material selected from the group consisting of nickel-based superalloy, cobalt-based superalloy, iron-based superalloy, and combinations thereof.

3. The method (100) of claim 1, wherein the high temperature base material (201) is a non-metallic material.

4. The method (100) of any of claims 1 to 3, wherein heating the metallic powder (203) includes controllably directing a focused energy source (202) toward the metallic powder (203).

5. The method (100) of any of claims 1 to 4, wherein the composition of the base material (201) and the metallic powder (203) are dissimilar.

6. The method (100) of any preceding claim, wherein the base material (201) includes an intermediate coating layer (301).

7. The method (100) of claim 6, wherein the intermediate coating layer (301) is a nickel-based superalloy.

8. The method (100) of claim 6 or 7, wherein the intermediate coating layer (301) and the metallic powder (203) are dissimilar.

9. The method (100) of any preceding claim, wherein the component (200) is a component (200) selected from the group consisting of a nozzle, bucket, shroud, combustor, fuel swirler, micromixer, and cartridge tips.

10. The method (100) of any preceding claim, further comprising, after the removing, applying a thermal barrier coating to the portion of the base material (201).

11. The method (100) of any preceding claim, further including the additional steps of, after forming the structure:
hot isostatically pressing the structure at an elevated temperature and elevated pressure sufficient to further consolidate the structure; and then
solutionizing the structure at an elevated temperature and for a time sufficient for distributing segregated alloying elements within the structure.

12. A component (200) comprising:
a formed portion (210) of the component (200) and a portion of a base material (201) having a high temperature resistant surface;
wherein the formed portion (210) includes sequentially joined layers of metallic powder (203) and the base material (201) includes a material selected from the group consisting of nickel-based superalloy, cobalt-based superalloy, iron-based superalloy, and combinations thereof.

13. The component (200) of claim 12, further comprising an intermediate coating layer (301) disposed intermediate the formed portion (210) and the portion of the base material (201).

14. The component (200) of claim 12 or 13, wherein the high temperature resistant surface is a flame contacting surface.
